# EUROPEAN PATENT APPLICATION

(11) **EP 2 511 802 A1**
(43) Date of publication of application: **17.10.2012**
(21) Application number: 11162722.0
(22) Date of filing: 15.04.2011
(51) Int. Cl.: G06F 3/042, G06F 3/041

(54) **Touch-sensitive display with optical sensor and optical method**

(71) Applicant: Research In Motion Limited, Waterloo, ON N2L 3W8 (CA)
(72) Inventor: Pasquero, Jerome, Waterloo Ontario N2L 3W8 (CA); Walker David Ryan, Waterloo Ontario N2L 3W8 (CA)
(74) Representative: Roberts, Gwilym Vaughan

(57) **Abstract**

An electronic device includes a touch-sensitive display that includes a display and a sensor that detects a reflected optical signal passing through the display, which optical signal is indicative of input to the electronic device. The electronic device optionally includes an emitter that sources the optical signal.

## Description

### Field of Technology

The present disclosure relates to electronic devices, including but not limited to, portable electronic devices having touch-sensitive displays and their control.

### Background

Electronic devices, including portable electronic devices, have gained widespread use and may provide a variety of functions including, for example, telephonic, electronic messaging and other personal information manager (PIM) application functions. Portable electronic devices include, for example, several types of mobile stations such as simple cellular telephones, smart telephones, wireless personal digital assistants (PDAs), and laptop computers with wireless 802.11 or Bluetooth capabilities.

Portable electronic devices such as PDAs or smart telephones are generally intended for handheld use and ease of portability. Smaller devices are generally desirable for portability. A touch-sensitive display, also known as a touchscreen display, is particularly useful on handheld devices, which are small and have limited space for user input and output. The information displayed on the touch-sensitive displays may be modified depending on the functions and operations being performed. With continued demand for decreased size of portable electronic devices, touch-sensitive displays continue to decrease in size. Improvements in devices with touch-sensitive displays are desirable.

An electronic device includes a touch-sensitive display that includes a display and a sensor that detects a reflected optical signal passing through the display, which optical signal is indicative of input to the electronic device. The electronic device optionally includes an emitter that sources the optical signal.

### Brief Description of the Drawings

FIG. 1 is a block diagram of a portable electronic device in accordance with the disclosure.

FIG. 2 is a sectional side view of a portable electronic device with an optical emitter and an optical sensor in accordance with the disclosure.

FIG. 3 is a flowchart illustrating a method of detecting input in accordance with the disclosure.

FIG. 4 illustrates an example of a touch on a portable electronic device in accordance with the disclosure.

FIG. 5 illustrates an optical navigation area of a portable electronic device in accordance with the disclosure.

FIG. 6 and FIG. 7 illustrate examples of optical navigation areas associated with deactivated pixels of a display in accordance with the disclosure.

### Detailed Description

The following describes an apparatus for and method of detecting input with an optical sensor of an electronic device. The electronic device may comprise, for example, a touch-sensitive display. A reflected optical signal that passes through the touch-sensitive display is indicative of the input. The reflected optical signal is detected by the optical sensor to provide the input to the electronic device.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

The disclosure generally relates to an electronic device, which is a portable electronic device in the embodiments described herein. Examples of portable electronic devices include mobile, or handheld, wireless communication devices such as pagers, cellular phones, cellular smart-phones, wireless organizers, personal digital assistants, wirelessly enabled notebook computers, tablet computers, and so forth. The portable electronic device may also be a portable electronic device without wireless communication capabilities, such as a handheld electronic game device, digital photograph album, digital camera, or other device.

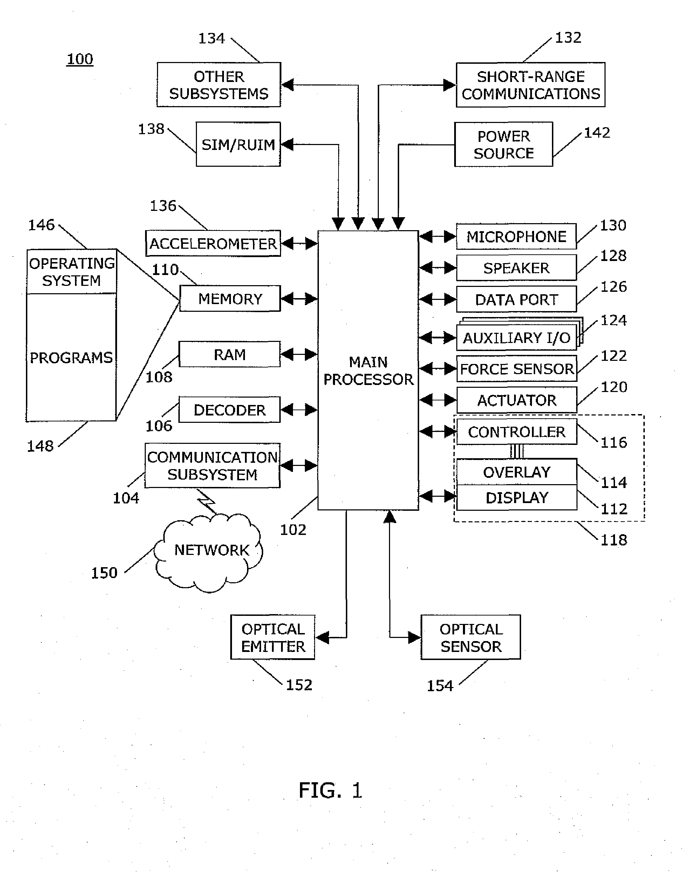

A block diagram of an example of a portable electronic device 100 is shown in FIG. 1. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The processor 102 interacts with other components, such as Random Access Memory (RAM) 108, memory 110, a display 112 with a touch-sensitive overlay 114 operably coupled to an electronic controller 116 that together comprise a touch-sensitive display 118, one or more actuators 120, one or more force sensors 122, an auxiliary input/output (I/O) subsystem 124, a data port 126, a speaker 128, a microphone 130, short-range communications 132, and other device subsystems 134. The display may be an organic light emitting diode (OLED) display, a liquid crystal (LCD) display, or any other type of display. User-interaction with a graphical user interface is performed through the touch-sensitive overlay 114. The processor 102 interacts with the touch-sensitive overlay 114 via the electronic controller 116 that provides touch data. Information, such as text, characters, symbols, images, icons, and other items that may be displayed or rendered on a portable electronic device, is displayed on the touch-sensitive display 118 via the processor 102. The processor 102 may interact with an accelerometer 136 that may be utilized to detect direction of gravitational forces or gravity-induced reaction forces.

To identify a subscriber for network access, the portable electronic device 100 uses a Subscriber Identity Module or a Removable User Identity Module (SIM/RUIM) card 138 for communication with a network, such as the wireless network 150. Alternatively, user identification information may be programmed into memory 110.

The portable electronic device 100 includes an operating system 146 and software programs or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

The touch-sensitive display 118 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. A capacitive touch-sensitive display includes a capacitive touch-sensitive overlay 114. The overlay 114 may be an assembly of multiple layers in a stack including, for example, a substrate, a ground shield layer, a barrier layer, one or more capacitive touch sensor layers separated by a substrate or other barrier, and a cover. The capacitive touch sensor layers may be any suitable material, such as patterned indium tin oxide (ITO).

One or more touches, also known as touch contacts or touch events, may be detected by the touch-sensitive display 118. The processor 102 may determine attributes of the touch, including a location of a touch. Touch location data may include an area of contact or a single point of contact, such as a point at or near a center of the area of contact. The location of a detected touch may include x and y components, e.g., horizontal and vertical components, respectively, with respect to one's view of the touch-sensitive display 118. For example, the x location component may be determined by a signal generated from one touch sensor, and the y location component may be determined by a signal generated from another touch sensor. A signal is provided to the controller 116 in response to detection of a touch. A touch may be detected from any suitable input member, such as a finger, thumb, appendage, or other objects, for example, a stylus, pen, or other pointer, depending on the nature of the touch-sensitive display 118. Multiple simultaneous touches may be detected.

The actuator(s) 120 may be depressed or activated by applying sufficient force to the touch-sensitive display 118 to overcome the actuation force of the actuator 120. The actuator(s) 120 may be actuated by pressing anywhere on the touch-sensitive display 118. The actuator(s) 120 may provide input to the processor 102 when actuated. Actuation of the actuator(s) 120 may result in provision of tactile feedback. When force is applied, the touch-sensitive display 118 is depressible, pivotable, and/or movable. Such a force may actuate the actuator(s) 120. The touch-sensitive display 118 may, for example, float with respect to the housing of the portable electronic device, i.e., the touch-sensitive display 118 may not be fastened to the housing. A mechanical dome switch actuator may be utilized. In this example, tactile feedback is provided when the dome collapses due to imparted force and when the dome returns to the rest position after release of the switch. Alternatively, the actuator 120 may comprise one or more piezoelectric (piezo) devices that provide tactile feedback for the touch-sensitive display 118.

Optional force sensors 122 may be disposed in conjunction with the touch-sensitive display 118 to determine or react to forces applied to the touch-sensitive display 118. The force sensor 122 may be disposed in line with a piezo actuator 120. The force sensors 122 may be force-sensitive resistors, strain gauges, piezoelectric or piezoresistive devices, pressure sensors, quantum tunneling composites, force-sensitive switches, or other suitable devices. Force as utilized throughout the specification, including the claims, refers to force measurements, estimates, and/or calculations, such as pressure, deformation, stress, strain, force density, force-area relationships, thrust, torque, and other effects that include force or related quantities.

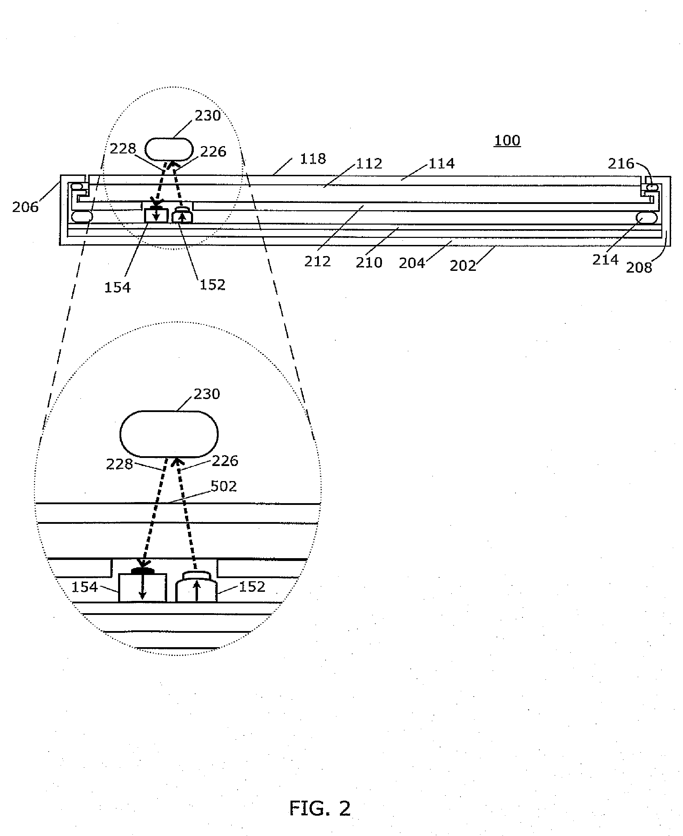

A sectional side view of the portable electronic device 100 with an optical emitter 152 and an optical sensor 154 is shown in FIG. 2. The cross section is taken through the center of the optical emitter 152 and the optical sensor 154. The portable electronic device 100 includes a housing 202 that encloses components such as shown in FIG. 1. The housing 202 may include a back 204, a frame 206, and sidewalls 208 that extend between the back 204 and the frame 206. A base 210 extends between the sidewalls 208, generally parallel to the back 204, and supports the actuator 120. The touch-sensitive display 118 may be supported on a support tray 212 of suitable material, such as magnesium, and the support tray 212 may be biased away from the base 210 toward the frame 206 by biasing elements 214, such as gel pads or springs, between the support tray 212 and the base 210. Compliant or compressible spacers 216, which may be, for example, gel pads or springs, may be located between the support tray 212 and the frame 206. The biasing elements 214 and/or the compressible spacers 216 may alternatively be substantially rigid. The biasing element 214 may not be included when the support tray 212 is supported by the base 210. The support tray 212 may be flexible. For purposes of this specification, the support tray 212 may be considered to be part of the touch-sensitive display 118.

The optical emitter 152 and the optical sensor 154 may be supported by the base 210, the tray 212, and/or the display 112. The optical emitter 152 emits an optical signal 226. The optical signal 228 is a reflected version of the optical signal 226. The reflection is reflected off the input member 230 such as described above. The input member 230 may be in contact with the touch-sensitive display 118 or may be separated from the touch-sensitive display 118 while in the vicinity of opening 232. The optical sensor 154 receives the optical signal 228 that is indicative of an input. The optical signals 226, 228 pass through the touch-sensitive display 118, i.e., propagate through the material of the touch-sensitive display 118, which includes the display 112 and the touch-sensitive overlay 114. The optical signals 226, 228 pass through the opening 232. Alternatively, a material may be disposed in the opening 232 in the support tray 212, through which material the optical signals 226, 228 pass. Alternatively, when the support tray 112 is sufficiently translucent for the optical signals 226, 228 to pass through or the support tray 112 is not included, the opening 232 need not be included.

The optical sensor 154 detects the optical signal 228 reflected off the input member 230. The optical signal 228 may be a version of the optical signal 226 that is modified by the input member 230. The optical signals 226, 228 may be modified, e.g., attenuated, phase-shifted, distorted, noise added, and so forth, as the optical signals 226, 228 pass through the display 112, the touch-sensitive overlay 114, and any other elements through which the optical signals 226, 228 pass. The optical sensor 154 detects the optical signal 228, which may be further processed depending on how the optical signal 228 is modified.

The optical emitter 152 may utilize infrared light, light amplification by stimulated emission of radiation (LASER) light, visible light, ultraviolet light, or any other type or combination of types of light to transmit the optical signal 226. The optical signal 226 and/or the optical signal 228 may include data, such as data embedded in the optical signal 226. The optical signal 226 may be sourced by light sources other than the optical emitter 152, such as the display 112, a backlight, or ambient light. The optical emitter 152 need not be included when the optical signal 226 is sourced by another light source, such as the display 112. Additional light or optical signals may be a part of the optical signal 228 and may be filtered out by the optical sensor 154 or another suitable device.

Although a single optical emitter 152 and a single optical sensor 154 are illustrated, any quantity of optical emitters 152 and optical sensors 154 may be included in the electronic device 100. For example, multiple optical emitters 152 may be utilized to source the optical signal 228. Multiple optical sensors 154 may be utilized to enable multiple-input detection. For example, two optical sensors 154, each disposed sufficiently separated from each other, may be utilized.

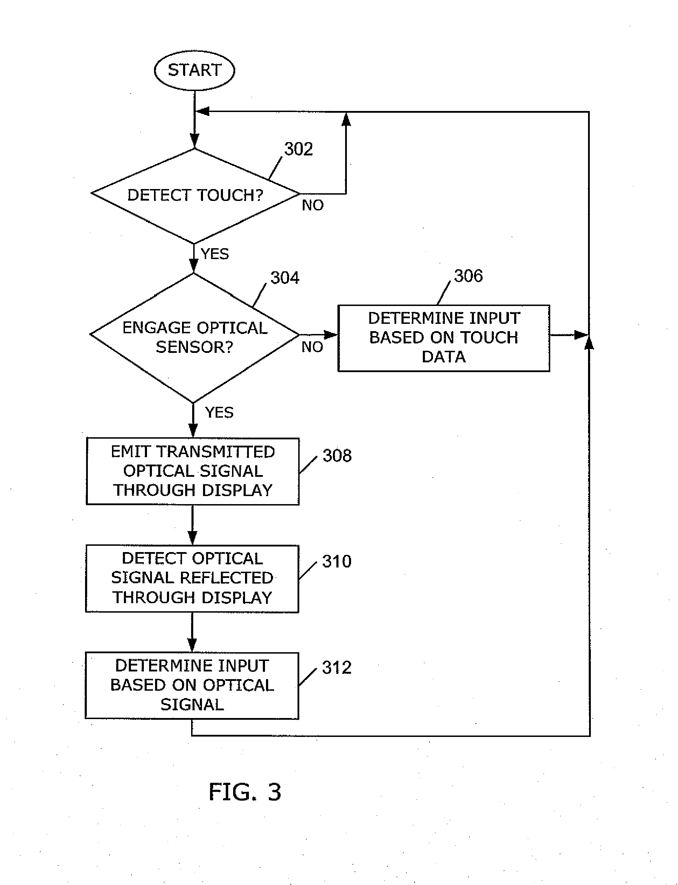

A flowchart illustrating a method of detecting input on a portable electronic device is shown in FIG. 3. The method may be carried out by software executed, for example, by the processor 102. Coding of software for carrying out such a method is within the scope of a person of ordinary skill in the art given the present description. The method may contain additional or fewer processes than shown and/or described, and may be performed in a different order. Computer-readable code executable by at least one processor of the portable electronic device to perform the method may be stored in a computer-readable medium.

When a touch is detected 302, a determination is made whether to engage the optical sensor 154 based on the touch. An input member need not physically make contact with the touch-sensitive display 118 for the touch to be detected. Characteristics of a touch on the touch-sensitive display 118 may be utilized to indicate that the optical sensor 154 is to be engaged. Example characteristics include a gesture made by the touch, e.g., tapping the screen a number of times, a shape of the touch, such as a circle or square, the time a touch is associated with one area of the touch-sensitive display such as a hover, the touch entering an area of detection for the optical sensor 154, the touch detected in association with an area where multiple selection items are displayed on the touch-sensitive display 118, and so forth. Optionally, an event other than a touch may be utilized to engage the optical sensor 154. For example, a menu entry input, detection by the optical sensor 154, selection by a physical key, and so forth may be utilized to engage the optical sensor 154.

The optical sensor 154 may optionally be activated automatically, e.g., without external input. For example, the electronic device 100 may evaluate current circumstances regarding the displayed selection items and engage the optical sensor 154. For example, the optical sensor 154 may be activated when selection items displayed on the touch-sensitive display are well-suited for fine navigation, e.g., when a touch is associated with more than one selection item, when a touch is between multiple selection items, when one or more selection items are smaller than a threshold size, when more than a threshold number of graphical elements are displayed in an area, when a text selection cursor or indicator is displayed, when a touch has an ambiguous input, and so forth.

The optical emitter 152 and/or the optical sensor 154 may be considered to be disengaged when powered off, in a reduced power mode or with minimal activity such as reduced frequency of transmitting/receiving, powered on but the input is disregarded, and so forth. Alternatively, the optical emitter 152 and/or the optical sensor 154 may be considered to be engaged when frequency of transmitting/receiving is reduced but not eliminated. The optical emitter 152 and/or the optical sensor 154 may operate at a reduced frequency when considered to be disengaged, which frequency may be increased when the optical sensor 154 is engaged at 304. When the optical sensor 154 is engaged at least partially when entering 304, the determinations at 304 and 306 may be optional. Alternatively, when the optical emitter 152 is not utilized, e.g., the optical signal 226 is sourced by a light source other than the optical emitter 152, the engaging determination 304 may be satisfied when the optical sensor 154 detects the optical signal 228.

When the optical sensor 154 is not engaged, input to the electronic device 100 is determined from the touch data from the touch-sensitive display 118.

When the optical sensor 154 is engaged, the optical emitter 152 emits 308 an optical signal, e.g., optical signal 226, that passes through the touch-sensitive display 118. The optical sensor 154 detects 310 the optical signal 228 that reflects off the input member 230 and passes through the touch-sensitive display 118. Input, which may be referred to as optical input, is determined 312 based on the optical signal 228.

The optical signal 228 received from the optical sensor 154 is converted to an electrical signal that is analyzed as known in the art. The conversion may be performed by the optical sensor 154, the processor 102, or another device. The optical input may be navigation information that is utilized to control movement of an indicator displayed on the display 112. For example, an optical signal 228 at a first time may be compared with an optical signal 228 at a second time to determine that the input member 230 has moved. For example, the optical signal 228 may be processed as an image and characteristics of the input member 230, e.g., outline of a finger, grooves in a finger, physical characteristic of an object such as a stylus, appearing in the image may be tracked to quantify the movement of the input member 230. The indicator on the display 112 may be a box, a rectangle, a cursor, a mouse pointer, a scroll control element, an icon, a highlighted character, a blinking line, and so forth. The input may alternatively be a fingerprint for a fingerprint recognition system, a selection of a displayed selection item, a gesture indicative of a command, e.g., scrolling, zooming, and panning, and so forth.

The optical input may be utilized to provide coarse control of the indicator or fine control of the indicator wherein the difference between coarse control and fine control is that fine control moves the indicator a smaller distance than coarse control moves the indicator. For example, the optical input may be utilized to provide finer control than input from the touch-sensitive display 118 to facilitate fine movement of the indicator.

The optical input may provide coarse control of the indicator. For example, a low-cost, low power optical sensor 154 that has a coarse detection resolution may be utilized to provide coarse control. Coarse input may be used to engage the optical sensor 154, the display 112, the touch-sensitive overlay 114, and/or any other element when the input member 230 is detected. For example, the optical emitter 152 and/or the optical sensor 154 may provide coarse control, e.g., the optical emitter 152 emitting the optical signal 226 at lower power and/or lower frequency and/or the optical sensor 154 detecting the optical signal 228 at a lower operating frequency, until the input member 230 is detected and the optical emitter 152 and/or the optical sensor 154 may transition to fine control , e.g., the optical emitter 152 emitting the optical signal 226 at higher power and/or the optical sensor 154 detecting the optical signal 228 at a higher operating frequency. The level of control may be adjustable by a user of the portable electronic device 100 and/or may be influenced by the resolution and/or the operating frequency of the touch-sensitive overlay 114 and/or the sensitivity of the optical sensor 154.

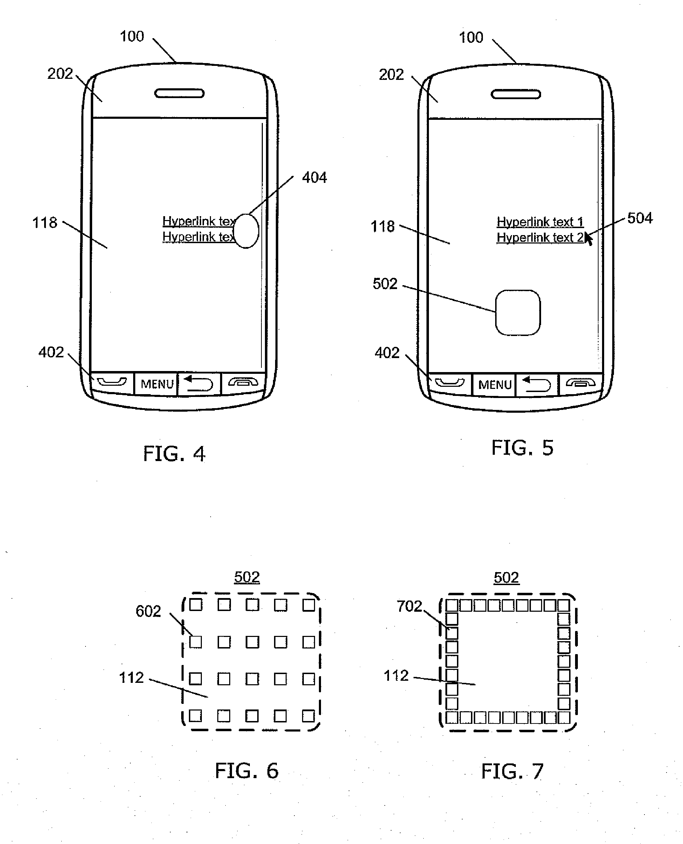

The portable electronic device 100 shown in FIG. 4 and FIG. 5 includes one or more buttons or keys 402 that may be physical or virtual buttons or keys. The buttons or keys 402 may be static graphics that are lit by a backlight, pixels displayed on a display, and so forth. The buttons or keys 402 may be utilized in conjunction with a touch on the touch-sensitive display 118 to engage the optical emitter 152 and/or optical sensor 154.

As shown in FIG. 4, a touch 404 may be associated with an area large enough to overlap parts of two selection items displayed on the touch-sensitive display 118, "Hyperlink Text 1" and "Hyperlink Text 2". Because the touch overlaps parts of two selection items, the input is ambiguous.

As shown in FIG. 5, an optical navigation area 502 is engaged in an area of the touch-sensitive display 118 that is shown in this example as a relatively small area compared to the area of the touch-sensitive display 118. The optical navigation area 502 is near the optical emitter 152 and the optical sensor 154 such that the optical signals 228 may be detected by the optical sensor 154.

The optical sensor 154 detects the presence and/or movement of an input member 230 (see FIG. 2, inset) on or near the optical navigation area 502. Movement of the input member is detected and processed as input to control an indicator 504 in this example. A border of the optical navigation area 502 is illustrated in FIG. 5, which may be a physical border or a displayed border. Alternatively, the border or any other indication of the dimensions of the optical navigation area 502 need not be visible. When the optical navigation area 502 is engaged, the touch-sensitive display 118 may turn off the pixels of the display 112 in the optical navigation area 502. Turning off the pixels may provide a visual indication of the optical navigation area 502. Turning off the pixels or otherwise orienting the pixels may provide a better path for the optical signals 226 and 228 to travel, e.g., by providing a larger path for the light to travel through, by reducing light interference caused by the display 112, and so forth.

Examples of an optical navigation area 502 associated with deactivated pixels of the display 112 are shown in FIG. 6 and FIG. 7. The dashed line, although not a physical element, represents a border of a detection area for the optical navigation area 502. Elements of the display 112, such as pixels, may be oriented to facilitate reception and/or detection of the optical signal 228. For example, all of the pixels associated with the optical navigation area 502 may be oriented, e.g., turned off, to facilitate reception and/or detection of the optical signal 228. As shown in FIG. 6, alternating pixels (or groups of pixels) 602 are turned on while other pixels between these pixels 602 are turned off. For example, when the display 112 is an OLED display, pixels are turned on to emit light. Pixels may be turned off to facilitate optical signals 226 from the optical emitter 152 to pass through the display 112 and reflections 228 of the optical signals to pass through the display 112 to the optical sensor 154. Alternatively, the pixels 602 may be oriented to reduce interference with light passing through the touch-sensitive display 118.

As shown in to FIG. 7, a border of pixels or group of pixels 702 are turned on while pixels in a remainder of the optical navigation area 502 are turned off. Turning off at least some of the pixels of the touch-sensitive display 118 in the optical navigation area 502 provides an indication of activation of the optical navigation control, facilitates the optical signal 226 reaching an input member 230 through the optical navigation area 502, facilitates the optical signal 228 reaching the optical sensor 154, and so forth.

The pixels 602, 702 that are turned on may source the reflected optical signal 228, e.g., when the optical emitter 152 is not included. The size of the pixels or group of pixels 602, 702 in the illustration is not intended to indicate the actual size of pixels or the group of pixels in an optical navigation area. Any other arrangement of enabled pixels and disabled pixels may be utilized. Although a touch-sensitive display is described, the techniques described herein may be applied to a non-touch-sensitive display.

When the optical sensor 154 is engaged, the touch data from the touch-sensitive display 118 may optionally be disabled to prevent an input conflict between the touch-sensitive display 118 and the optical sensor 154. For example, the controller 116 and/or the touch-sensitive overlay 114 may be powered down, the touch-sensitive overlay 114 may be disengaged in and/or near the optical navigation area 502, some or all of the touch data may be disregarded, and so forth. When the touch-sensitive overlay 114 is engaged, the optical sensor 154 may optionally be disengaged. When the touch-sensitive overlay 114 or the optical sensor 154 is disengaged, input from the disengaged device may be detected, but disregarded as input. Alternatively, when the touch-sensitive overlay 114 or the optical sensor 154 are disengaged, power may not be provided to the disengaged device. For example, the optical emitter 152 and/or the optical sensor 154 may be powered off to conserve battery. Part of the touch-sensitive display 118 may remain engaged when the remainder of the touch-sensitive display 118 is disengaged to detect input to re-engage the remainder of the touch-sensitive display 118. For example, an area of the touch-sensitive display 118 at an opposite end of the touch-sensitive display 118 from the optical navigation area 502 may remain engaged, and when input is detected in that area, the remainder of the touch-sensitive display 118 is engaged.

The touch-sensitive display 118 and the optical sensor 154 may be simultaneously enabled and may provide cooperative functionality. For example, when a stationary touch is detected via the touch-sensitive display 118, and a swiping movement is detected by the optical sensor 154, an image displayed on the display 112 may be scrolled. Other functions may be provided by combined input from the touch-sensitive display 118 and the optical sensor 154. Input from the touch-sensitive display 118 may engage input detection by the optical sensor 154 and vice versa. For example, when a stationary touch associated with the optical navigation area 502 is detected via the touch-sensitive display 118, a disengaged optical emitter 152 and/or optical sensor 154 may be engaged. Engaging or disengaging of the touch-sensitive display 118 and/or the optical sensor 154 may additionally or alternatively be controlled through an input menu, an input gesture, and so forth.

Through the utilization of one or more techniques described herein, an optical sensor provides input to an electronic device. The input may be provided through an optical navigation area that is part of a touch-sensitive display. User experience with the portable electronic device is enhanced, by providing a second form of user input that may be utilized in conjunction with the touch-sensitive display. When the optical sensor provides fine navigation control for a displayed indicator, coarse control may be provided through the touch-sensitive display. The optical sensor provides added input capability, for example, to provide fine selection control, e.g., to select selection items that are difficult to select via the coarser control of a touch-sensitive display.

The present disclosure may be embodied in other specific forms without departing from its spirit or essential characteristics. The described embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

## Claims

1. An electronic device comprising:
a touch-sensitive display that includes a display;
a sensor that detects a reflected optical signal passing through the display, which optical signal is indicative of input to the electronic device.

2. The electronic device of claim 1, further comprising an emitter that sources the optical signal.

3. The electronic device of claim 1, wherein the sensor detects the optical signal through a window that has an area that is smaller than an area of the touch-sensitive display.

4. The electronic device of claim 1, wherein a window of the display is controlled to facilitate the optical signal passing through the display.

5. The electronic device of claim 1, further comprising an opaque support for the touch-sensitive display, wherein the sensor detects the optical signal passing through an opening in the support.

6. The electronic device of claim 1, wherein the optical signal comprises infrared light.

7. A method comprising:
engaging an optical sensor;
detecting, by the optical sensor, an optical signal passing through a display of an electronic device;
determining an input based on the optical signal.

8. The method of claim 7, wherein the input is first navigation information and a second input to the touch-sensitive display provides second navigation information, wherein the first navigation information provides a finer control of an indicator than a control provided by the second navigation information.

9. The method of claim 7, wherein the optical signal is reflected from an input member.

10. The method of claim 7, further comprising emitting light that passes through the display, which light sources the optical signal passing through the display.

11. The method of claim 7, further comprising displaying on the touch-sensitive display a border for an area of the touch-sensitive display through which the optical signal passes.

12. The method of claim 7, wherein the detecting the optical signal is performed in response to detecting input that engages the detecting the optical signal.

13. The method of claim 7, wherein the light reflection provides navigation control that is finer than navigation control provided by the touch-sensitive display.

14. The method of claim 7, further comprising turning off a part of the display in an area through which the optical signal passes through the display.

15. The method of claim 7, further comprising orienting pixels of the display to facilitate detection of the optical signal.

## Amended claims

### Amended claims in accordance with Rule 137(2) EPC.

**1.** An electronic device (100) comprising:
a touch-sensitive display (118) that includes a display (112);
a sensor (154) that detects a reflected optical signal passing through the display (112), which optical signal is indicative of input that is utilized to control movement of an indicator on the display (112) of the electronic device (100).

**2.** The electronic device (100) of claim 1, further comprising an emitter (152) that sources the optical signal.

**3.** The electronic device (100) of claim 1, wherein the sensor (154) detects the optical signal through a detection area that has an area that is smaller than an area of the touch-sensitive display (118).

**4.** The electronic device (100) of claim 1, wherein a detection area of the display (112) is controlled to facilitate the optical signal passing through the display (112).

**5.** The electronic device (100) of claim 1, wherein the reflected optical signal passes through a touch-sensitive layer (114) of the touch-sensitive display (118).

**6.** The electronic device (100) of claim 1, wherein the optical signal comprises infrared light.

**7.** A method comprising:
engaging an optical sensor (154);
detecting, by the optical sensor (154), an optical signal passing through a display (112) of an electronic device (100);
determining an input that controls movement of an indicator on the display (112) based on the optical signal.

**8.** The method of claim 7, wherein the input is first input, further comprising determining a second input to control movement of the indicator, wherein the first input provides finer control of the indicator than a control provided by the second input.

**9.** The method of claim 7, wherein the optical signal is reflected from an input member (230).

**10.** The method of claim 7, further comprising emitting light that passes through the display (112), which light sources the optical signal passing through the display (112).

**11.** The method of claim 7, further comprising displaying on the display (112) a border for an area of the display (112) through which the optical signal passes.

**12.** The method of claim 7, wherein the detecting the optical signal is performed in response to detecting input that engages the detecting the optical signal.

**13.** The method of claim 7, wherein the light reflection provides navigation control of the indicator that is finer than navigation control provided by a touch-sensitive display (118) of the electronic device (100).

**14.** The method of claim 7, further comprising turning off a part of the display (112) in an area through which the optical signal passes through the display (112).

**15.** The method of claim 7, further comprising orienting pixels (702) of the display to facilitate detection of the optical signal.
